# EUROPEAN PATENT APPLICATION

(11) **EP 2 801 810 A1**
(43) Date of publication of application: **12.11.2014**
(21) Application number: 12824922.4
(22) Date of filing: 28.12.2012
(51) Int. Cl.: G01N 1/30

(54) **FIXING COMPOSITION FOR CYTOLOGY, CELL-FIXING METHOD AND THE USES THEREOF**

(30) Priority: 04.01.2012 PT 2012106082
(71) Applicant: NS - Nova Saúde Parcerias, SA., 4585-116 Gandra Paredes (PT)
(72) Inventor: NEVES FERREIRA, Fernando Jorge, 4445-199 Alfena Valongo (PT); MELO ALVES, Paula, 4550-219 Castelo de Paiva (PT)
(74) Representative: Ferreira, Maria Silvina
(86) International application number: PCT/IB2012/057799
(87) International publication number: WO 2013/102837

(57) **Abstract**

The present invention refers to a fixative composition for cytology, comprised by an alcoholic base and toluidine blue, preferably mucous cells, like cells from the oral cavity and cells from exo and endocervix.

The present invention also describes a method for cytology fixation, and the application and method of this composition for medical use, namely, in neoplasic detection, preferably, cervix and oral cavity cancers.

## Description

### Technical Domain of the Invention

The fixative solution for cytology described in the present invention is a liquid base solution developed for cells collected by smear or swab. Both for clinical and laboratorial utilization, within the life science scope, its goal are cell preservation and coloration.

It is a solution addressed for clinical and laboratorial diagnosis, with elevated applicability in screening campaigns, targeting several health care professionals with different backgrounds.

### Background

The current fixative and tissue processing techniques developed so far include several processing stages, which force several laboratorial steps, are time consuming and unfeasible to be executed by low experienced professionals or that are not familiarized with the laboratory processing. For example, the referred laboratory techniques are not feasible to be executed by clinicians (doctors or dentists, for example).

Generally the cells treatment in cytology includes its collection and subsequent dispatch to lab for processing. In the lab, cells are post-fixed, sometimes centrifuged and next dehydrated and stained (the most frequently used stain in cytology is Papanicolau). In the end, the time consumed in the laboratory is about 108 minutes per sample. It adds the fact of the demanding laboratory conditions for cytology sample processing. For conventional processing of gynaecologic or non-gynaecologic cytology several equipment is necessary like centrifuges, hotte, fridge, countertop, besides much more several small equipment like pipettes, test tubes, cuvette coloring, amongst others.

Nowadays, for gynaecological cytology or non-gynaecologic cytology alcoholic base fixators (methanol, ethanol or propanol) are used in a liquid form or spray. These fixators act only as cells preservation, not presenting staining characteristics. By default, a fixator only preserves cells. There is no record of fixator use that concomitantly adds staining characteristics to cells, allowing by that differentiation of the different cell organelles, being either basophils of acidophilus.

The developed composition has an alcoholic basis, ethanol type, associated with toluidine blue, which is a metachromatic stain, that is, stains differently basophilic and acidophilic structures. It comes to light for the first time, a solution for cytology that is at the same time a stainer and a fixator. Usually, fixation and staining are different steps in routine histochemistry, present different applications, are composed by different products and, inclusively, have different processing times. The chosen fixators can be very different (formol, methanol, ethanol, propanol, Bouin, ice and air), and stainers present a very large spectrum, being the most commonly used haematoxylin, eosin or Orange. Because until now they were considered incompatible, strainers and fixators don't mix in the conventional histochemistry. The proposed composition unequivocally breaks these concepts and materializes for the first time the association of a fixator (ethanol) and a stainer (toluidine blue) in a single composition. This type of proposed association was never successfully experimented, until now.

In the scope of laboratory chemistry applied to general diagnosis and cytology in particular, it was never found possible that a stainer and a fixator associated were able to produce its action in a complementary and synergic form. In fact, the variables at stake are numerous and difficult to conciliate (pH, solubility, temperature, type of cell, organelles, diagnostic goals, time, amongst others). Maybe because all of that the task was considered impossible until now. Due to all the mentioned facts, the developed solution is innovative right from its concept. Conciliates and potentiates the chemical characteristics of the involved products, without loosing the practical side of its application. It allows the diagnosis of several cellular types, with high quality, structure differentiation and with a fast execution time. This way, the described composition in the present invention allows simultaneously fixing and staining a cytological sample.

This composition is totally new since the toluidine blue was never used in fixative solutions, and it is not commonly used in alcoholic solutions, and even less in addition to acetic acid.

Comparison of the classical used technique and the proposal with the new fixative composition:

### Classic technique (Papanicolau staining):

Papanicolau staining is considered the international standard for gynaecological staining, and it can be equally used in other materials. Samples are fixed in ethylic acid, isopropyl or polyethylene glycol. The fixed material in the slide is submitted to the action of several ethanol dilutions, followed by a stain, and again the action of alcohols and cytoplasmic stains. Finally, it is submitted to the dehydrating action of alcohol and xilol, accordingly to the following times presented.

Necessary materials: cytological fixator, chloridric acid, ammonia hydroxide, coloration cuvettes, graduated pipettes, absolute alcohol, xilol, chronometer, colouring vat.

### Coloration:

- Absolute Alcohol - 5'
- 95% Alcohol - 5'
- 70% Alcohol - 5'
- Distilled water - 5'
- Haematoxylin - 2'
- Distilled Water - 10'
- Ammonia Alcohol - 5'
- Running Water - 10'
- 70% Alcohol - 5'
- 95% Alcohol - 5'
- Absolute Alcohol - 5'
- OG-06 - 1'
- Absolute Alcohol - 10'
- Absolute Alcohol - 10'
- EA-36 - 2'
- Absolute Alcohol - 10'
- Absolute Alcohol - 10'
- Xilol - 1'
- Xilol - 1'
- Xilol - 1'
- Total time: 108 minutes

In order to assess the proposed fixative composition sensibility and specificity, a pilot study was performed involving 200 cases of smear collection in the oral cavity. When related the results of the fixing and staining composition with the Papanicolau staining ones, the new solution has a sensibility of 95% and a specificity of 83%. With these data it is possible to conclude that the proposed fixative composition constitutes a high-value asset in the oral cavity lesions diagnosis, able to be performed by less qualified professionals in the laboratory field, and with shorter times.

### Summary

The described fixative solution pretends to develop an innovative composition and method for cytology fixation and coloration, making this process faster and allowing a more effective detection of cell anomalies, preferably neoplasia.

This composition allows:
- To drastically reduce cytology fixing and staining times, allowing a fast and easy screening;
- To reduce the number of products and steps involved in the process, enabling the cytology detection method to be used close to the patients;
- The composition and methodology of the present invention does not imply the use of differential equipment, qualified technicians and many logistic resources and materials;
- The fixative composition and methodology of the present invention make possible large scale screening campaigns, more precisely screening on mucous neoplasia, like in oral or cervix cancer.

With this method, you can get a sample ready for microscopic observation in at least 1 minute (preferably 1-20 min, more preferably 2-15 min, even more preferably 3-10 min, namely, 4, 5, 6, 7, 8, 9 min), against the actual 60 minutes. Any professional without training can do this fast processing, as long as he/she follows the instructions attached (unlike the classic technique). The developed composition, unlike the actual technique, is economical, universal, doesn't required sophisticated equipment, it's fast and it doesn't need to be used in a laboratorial environment, doesn't need differentiated technicians and allows its use in hostile settings, with few technical and human resources. It also adds up its good physical and chemical qualities. It's stable to temperature fluctuations, low sensitivity to light, stable pH, allowing an easy and riskless transportation, low demanding warehousing, and long time preservation.

By its constituents, this fixator becomes very competitive, as it's cheap and easily prepared. By its cell preservation characteristics, the chosen alcohol is ethanol, which chemical formula is C₂H₅OH. This alcohol is highly mixable with water.

The combination in one single solution fixing and staining characteristics is totally innovative, and never its success has been achieved, until now. It's a high-value asset to the market, definitely revolutionizing cell processing, with screening or diagnosis as ultimate goal. It is applicable to all type of cells, in any living animal all over the world.

The present innovation describes a fixative composition for cytology that comprises:
a) An alcoholic base
b) Toluidine blue stain.

The described composition is used for fixation, preservation and simultaneous staining of cells.

In a preferred embodiment of the present invention the composition object of the present invention is constituted only by an alcoholic base and toluidine blue.

In another preferred embodiment of the composition object of the present invention, might additionally have an acid, ideally weak, as acetic acid and/or distilled water.

In an even more preferred embodiment the alcoholic base of the composition object of the present invention can be ethanol at 70% (v/v).

In a more preferred embodiment of the composition object of the present invention comprises
- 80-99.5% p/v alcoholic base and
- 0.5-20% p/v toluidine blue.

Even more preferably 98.5% p/v alcoholic base and 1% p/v toluidine blue, 0.5% p/v acetic acid.

In another preferred embodiment of the present invention the fixed cells are mucous cells, preferably cells from oral cavity and cells from exo and endocervix.

In a preferred embodiment of the present invention the composition can be used in medicine, namely for neoplasic detection as, for example, in cervix cancer and oral cavity.

In another preferred embodiment the present invention describes a container that comprises the described compositions.

The present invention also describes the fixation method characterized by comprising the following steps:
- Placement of the cell sample on the microscope slide, preferably smear;
- Slide drying;
- Application of the described compositions;
- Slide washing under running water;
- Observation of the referred cells.

In a more preferred embodiment the referred cells are from the mucosa, preferably cells from the oral cavity and exo and endocervix.

In a more preferred embodiment the observation of the referred cells is performed immediately.

The present invention also describes the method for obtaining the fixative composition, which comprises the following steps:
a) Dilution of toluidine blue powder in alcohol, shaking it;
b) Dilution of acetic acid;
c) Mixture of stain and acetic acid solutions, with a shake;
d) Fixative packaging.

### General description of the invention

The fixative composition for cytology described in this invention performs in the same step cell fixing and staining. The alcoholic base (ethylic acid) allows cell fixation and the presence of toluidine blue allows staining with a good cellular definition. Acetic acid can be also added in order to increase the fixative power. This composition allows to obtain the sample for analysis in 1 minute. It is applied over the slide that is quickly washed in running water, reaching all the procedure a surprisingly reduced total time of 1 minute.

### Detailed Description of the Invention

The present invention describes a fixative and staining composition for cytology that allows at the same time fixing and staining cells, that is, its cellular definition, conveying to fast diagnosis. By this, the use of this composition allows a significant procedure simplification, with shortening time and outstanding cost reduction. At the same time, the application of toluidine blue to cytology is innovative, either gynaecologic or non-gynaecologic. Until now, toluidine blue was used essentially as an intra-oral marker, to help the biopsy technique.

The fixative and staining composition described in the present invention allows, in around 1 minute, to have a sample ready for microscopic observation.

### Obtaining the fixative composition:

The fixative and staining composition described in the present invention is based in a toluidine blue alcoholic solution.

In a preferred embodiment, the preparation of the composition should comprise the following steps:
- Toluidine blue weighting, as it's commercialized in powder;
- Preparation of ethylic acid at 70% v/v diluting 30% of distilled water in 70% v/v of absolute alcohol;
- Toluidine blue dilution to 1% p/V in a 70% ethylic acid solution - for example, adding 1g of toluidine blue to 100ml of ethylic acid at 70%.

In an even more preferred embodiment, acetic acid can also be added, diluting it at 0.5% v/v in distilled water.

### Ethanol or common alcohol (C₂H₅OH) :

The used ethanol, simply known as alcohol, or ethylic acid or cereal alcohol, which chemical formula is C₂H₅OH, is the most common alcohol. It is colourless, mixable in water, presents a density of 0.789gcm⁻³, fusion point-114.3°C and boiling point of 78.4°C.

### Acetic acid or ethanoic acid (C₂H₄O₂) :

It is a weak acid (pH 4.76 at 25°C), presents a fusion point at 16.5°C and boiling point at 118.1°C. It is a histologic fixator that is commonly used in the preparation of Bouin solution.

### Toluidine blue or Tolonium chloride (C₁₅H₁₆CIN₃S) :

The toluidine blue it's a toluene derivative. Presents a solubility of 30g/l (25°C), pH of 2.8 (water at 25°C), molecular mass of 305.82g/mol, it's odourless, and safely transported. It is a metachromatic stain that stains RNA in pink and DNA in blue.

### Preparation:

The preparation of toluidine blue, which is commercialized in powder (usually 25g containers), starts with its weighting in a digital scale, properly calibrated. After weighting 1g of toluidine blue, this is diluted in 100ml of ethanol at 70%, previously measured in a graduated beaker. This mixture happens easily, needing only a gentle shake. In another graduated beaker a solution of acetic acid at 0.5% diluted in distilled water is prepared. Afterwards, 99.5ml of toluidine blue alcoholic solution at 1% is removed from the first beaker, to which is added, from the second beaker, 0.5ml of acetic acid solution at 0.5%. After stirring we obtain this new fixative composition ready to be used. This way, using ethanol miscibility, the final solution is able to perform its double function of fixator and stain.

Since procedures are simplified, at the same time there is a proportional reduction of the demanded conditions. Sophisticated equipment becomes unnecessary, as complex laboratories that consume significant material and human resources. The developed fixative composition allows its technical execution in remote places and by low differentiation professionals, unlike what it happens until now. It becomes now viable the large scale screening programs not only in remote places, but also in the accessible ones, due to the low economic resources needed.

In the clinic environment the professionals might own the kit themselves (portable test) that includes the composition, and this way ensuring its patients the screening of potentially serious pathologies, that accordingly to its surroundings allows remote help through email or sms, using a computer or mobile phone.

The fixative composition allows an excellent cellular outline, evidences the nucleus of the mucous cells, and its membranes. In the nucleus, RNA stains pink and DNA blue. The cellular and nuclear membranes equally stain intense blue, which contrasts with the cytoplasm that stains light blue. Like this, it is possible to observe the perfectly differentiated cell, clarifying malignancy criteria and clinical intervention.

Until now, in remote places or far from the big centers, in the interior of Portugal or African region, it wasn't possible to plan routine cytological screening programs or access to observe any cytology in just 1 minute. It was necessary to send the sample to distant places, to well-equipped laboratories, which compromised or made the diagnosis impossible. Also relevant are the associated costs to any simple procedure for cytological samples.

With this new composition appears a simple, fast and economic solution of all process. In the end, the greatest return is to the people, to their health, their access. It becomes possible to reach a screening or diagnosis in any place of the world, easily and comfortably, simplifying procedures, and putting medicine closer to people, especially the weakest ones.

With this new composition several scientific works were already tested, with the final goal of demonstrating its usefulness and innovation. A study was set up with cytological samples from the oral cavity or gynaecological smears. In the already performed study we concluded that in 100% of the cases the cellular samples were correctly fixed and stained with this new fixative composition, demonstrating its ambivalence for both gynaecologic and non-gynaecologic cytology. The samples were processed by trained individuals, but most of them by non-trained individuals (students and volunteers) that applied the described protocol that is provided with the fixative composition.

500 cytological samples were collected, 300 from the oral cavity, including saliva samples and 200 from the cervix.

The samples were collected in 200 different people, by 10 professionals with specific training in clinical and laboratorial fields.

### Procedures description (smear) :

- Sample collection;
- Sample placing on the slide as smear;
- Slide drying in the air - 1 minute;
- Composition application in the slide - 1 minute;
- Quickly wash with running water;
- Observation and reading.

The sample processing can be made by smear or put the sample in fixative liquid and sent to the laboratory. In case it is sent to lab, it can optionally and complementarily proceed to the sample observation in smear with the following technique (optional):

### Procedure description (smear and liquid environment) :

- Sample collection;
- Sample placing in the slide as smear and in liquid environment;
- Labelling and send to lab;
- Slide drying in the air - 1 minute;
- Composition application in the slide - 1 minute;
- Quickly wash with running water;
- Observation and reading.

The present invention is not naturally restrict to the embodiment described in this document and a person with middle knowledge of the field can predict many possibilities of modification without deviate from the core idea of the invention, as defined in the claims.

The described embodiments are combined amongst them trivially.

The following claims define additionally preferred embodiments of the present invention.

## Claims

1. Fixative composition for cytology **characterized by** comprising: an alcoholic base and toluidine blue.

2. Compositions according to the previous claim, **characterized by** constitute in an alcoholic base and toluidine blue.

3. Composition according to the previous claims, **characterized by** the alcoholic base is preferably ethanol at 70% v/v.

4. Fixative composition according to the previous claims, characterized to comprise:
• 80-99.5% p/v alcoholic base
• 0,5-20% p/v toluidine blue.

5. Fixative composition according to the previous claims **characterized by** comprising additionally an acid, preferably a weak acid like acetic acid.

6. Composition according to any of the previous claims, characterized to comprise:
• 98.5% p/v alcoholic base;
• 1% p/v toluidine blue;
• 0.5% p/v acetic acid.

7. Composition according to the previous claims, characterized to comprise additionally distilled water.

8. Composition described in the claims from 1 to 7 **characterized by** being able to be used in medicine.

9. Composition according to the previous claim characterized to be able to be used in the detection of neoplasia

10. Composition according to the previous claim **characterized by** the neoplasia being cervix cancer or oral cavity cancer.

11. Case for cancer detection **characterized by** comprising the compositions described in any of the previous claims.

12. Method for cytology fixation **characterized by** comprising the following steps:
• Placing of the cellular sampling on the slide, preferably smear;
• Slide drying;
• Application of the described compositions on the claims 1 to 10 on the referred slide;
• Rinse in running water;
• Observation of the referred cells.

13. Method according to the previous claim **characterized by** the referred cells being mucous cells, preferably from the oral cavity and cervix.

14. Method according to the claims 12 to 13 **characterized by** the observation of the referred cells be done immediately.
